# EUROPEAN PATENT APPLICATION

(11) **EP 1 598 983 A1**
(43) Date of publication of application: **23.11.2005**
(21) Application number: 05010618.6
(22) Date of filing: 17.05.2005
(51) Int. Cl.: H04L 12/28, H04L 29/06

(54) **Apparatuses interfacing with a mobile communications network for storing and transmitting data in telecontrol system**

(30) Priority: 19.05.2004 IT VR20040084
(71) Applicant: XEO4 S.p.A., 37067 VALEGGIO SUL MINCIO (Prov. of Verona) (IT)
(72) Inventor: Cravedi, Massimiliano, 29100 Piacenza (IT); Fontanive, Massimo, 29100 Piacenza (IT)
(74) Representative: Modiano, Micaela Nadia

(57) **Abstract**

A data storing and transmission device (11) provided with a central processing unit (5), which is provided with memory means (4) and is connected at least to a data acquisition means (6) and with means for interfacing with a mobile communications network (2,3); the means for interfacing with a mobile communications network (2,3) are adapted to interface with a second- or third-generation packet-switching network, preferably of the GPRS or UMTS type.

## Description

The present invention relates to a data storing and transmission device for use in telecontrol systems and to a telecontrol system particularly for real-time monitoring of data acquired at production sites.

Telecontrol systems are generally used in industrial situations constituted by multiple production sites distributed over a territory, which in order to optimize production must be constantly adapted to physical parameters such as for example pressure, levels, temperatures, state of the machines, and so forth.

These systems generally detect the values of so-called critical parameters, which are then collected by the assigned personnel or transmitted automatically to a control center, where they are processed in order to optimize the processes at the production sites.

Another field of application of these systems is teleservice, which provides for the remote sensing of malfunctions of plants or machines and if possible also of data that allow to trace the corresponding causes, with the aim of optimizing maintenance and repair processes.

Several data storing and transmission devices used in telecontrol systems are currently already known. Among these, remote alarm cards are capable of providing alarm signals, typically in the form of an SMS or a synthesized-speech telephone call, to the terminal of the client, such as for example a telephone or mobile phone. Although this device is fairly reliable and is easily commercially available, it has the disadvantage that it can only transmit alarm signals and therefore can only differentiate between predefined states, some of which are set to generate an alarm signal.

Data loggers are instead devices that are capable of storing a continuum of values of the quantity to be acquired. Although they solve the disadvantage of remote alarm cards, these devices suffer other drawbacks, since they do not have means for remote transmission of the acquired values. The measured data are stored in the system and subsequently collected by a technician, who goes on-site to download the stored data from the memory.

Another telecontrol system that is currently known is remote management. This system combines the advantages of remote alarm systems and of data logger-using systems, since it uses control units that are capable of both acquiring data continuously and of storing data locally, like a data logger, and, in case of an alarm, of sending a signal to the assigned personnel, like a remote alarm. Differently from the other systems, remote management requires a control center that daily connects to the sensing device and downloads from it the historical data after adequate and often not easy programming thereof. Such control center generally has very high fixed installation costs and often requires skills beyond those normally possessed by the user.

The type of connection between the control units and the control center is almost always of the telephone type, for example over a switched line or GSM link, with traffic costs that are a function of the number and duration of the calls. Moreover, these systems are generally capable of providing only point-to-point connections between the server for accessing the control center and a control unit, thus causing management of a plurality of control units to be complex and slow. The difficulties in managing a plurality of control units simultaneously arise from the choice of the type of connection between the control units and the control center, which does not directly support communications based on the TCP/IP protocol. Not least, these systems are not capable of providing an interaction among control units.

Finally, supervisor devices are also known which are used in systems that are particularly suitable for plants that require high reliability in order to avoid high costs caused by any downtime. Supervisor devices are considerably complicated and can be used only to acquire data in a limited area. Moreover, they require considerable operating costs and long installation and testing times.

The aim of the present invention is to eliminate the drawbacks noted above in known types of data storing and transmission devices used in telecontrol systems by devising a data storing and transmission device that allows to acquire physical data at production sites and transmit them, even in real time, with high reliability and low transmission costs.

Another object of the present invention is to provide a data storing and transmission device that allows to act directly on the operation of the production sites by means of a remote terminal.

Another object of the present invention is to provide a telecontrol system that is capable of managing a plurality of control units simultaneously, optionally also allowing their mutual interaction.

Another object of the present invention is to provide a telecontrol system that allows to monitor the critical parameters without requiring the user to establish a dedicated control center.

This aim and these and other objects are achieved by the device according to the invention and by the telecontrol system that uses said device, which comprises at least one input port, which is adapted to receive data and is connected internally to a processing unit provided with memory means, and further comprises means for interfacing with a mobile communications network and is characterized in that said means for interfacing with a mobile communications network are adapted to interface with a packet switching network of the second or third generation.

Conveniently, the device further comprises at least one port adapted to transmit control signals to means for actuating controls.

Advantageously, the means for interfacing with the mobile communications network are suitable for interfacing with a GPRS or UMTS network.

Further characteristics and advantages of the invention will become better apparent from the description of a preferred but not exclusive embodiment of the data storing and transmission device, illustrated by way of non-limiting example in the accompanying drawings, wherein:
Figure 1 is a schematic view of a first telecontrol system that uses the device according to the invention;
Figure 2 is a schematic view of a second telecontrol system that uses the device according to the invention;
Figure 3 is a schematic view of the architecture of the device according to the invention;
Figure 4 is a schematic view of the architecture of the server for interfacing with the device according to the invention;
Figure 5 is a block diagram that illustrates schematically the steps required by a user to read remotely the data acquired by the device according to the invention and to optionally drive it;
Figure 6 is a block diagram that illustrates in greater detail the data acquisition and transmission steps of the device according to the invention;
Figure 7 is a block diagram that illustrates the main cycle performed, in a preferred embodiment given by way of non-limiting example, by the firmware of a storing and transmission device according to the invention;
Figure 8 is a block diagram that exemplifies the management of the connection between the device and the server according to the preferred embodiment of Figure 7.

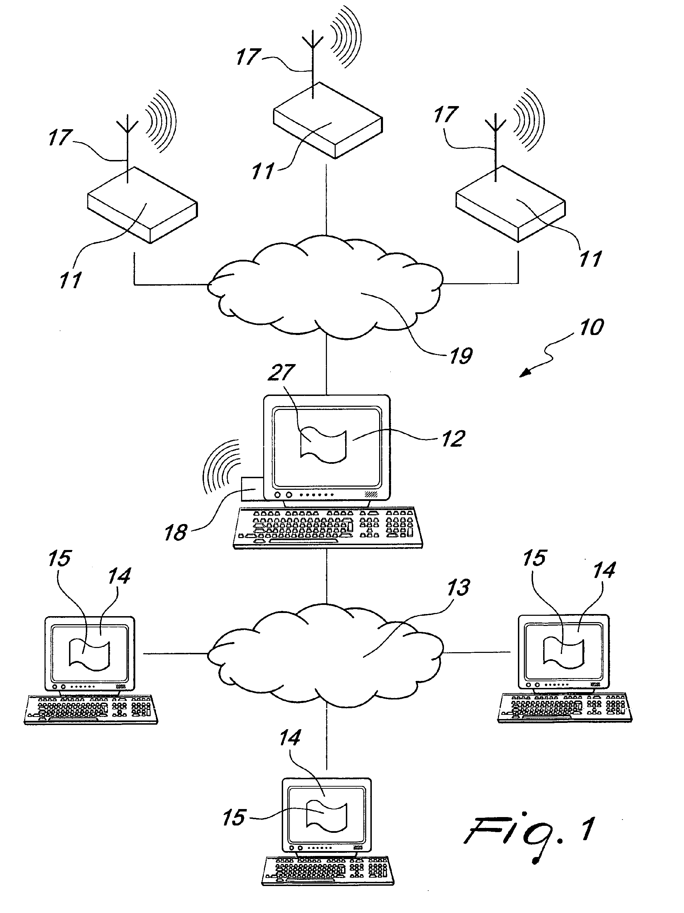

As shown schematically in Figure 1, the telecontrol system 10 that uses the device according to the invention provides for the arrangement, at a production site, of one or more data storing and transmission devices 11 according to the invention. Such measurement and transmission devices 11 comprise means 17 for interfacing with a data communications network 19 for packet-switching mobile communications of the second or third generation, such as for example GPRS or UMTS. Said interfacing means 17 allow, by means of the mobile communications network 19, to exchange data between the data storing and transmission devices 11 and a remote server 12, which is also provided with means 18 for interfacing with said mobile communications network 19.

Moreover, the architecture of the telecontrol system 10 connects the server 12 to a data communications network 13, which the individual users can access by means of terminals 14. It is therefore possible to establish, from every terminal 14 of the data communications network 13, a connection to the devices 11 according to the invention by means of the server 12.

The data communications network 13 can assume various typologies: in the case of an internal data communications network 13, it can be of the intranet type, of the LAN (local area network) type, of the PAN (personal area network) type, WAN (wireless area network) type or other type, depending on the requirements of the context in which the telecontrol system is used. The server 12, as an alternative to an internal data communications network 13, can use the Internet, allowing access to the devices 11 by personnel that is not at the main office or is otherwise unable to access the local or company network but has access to the Internet. If the access is provided via the Internet, it is possible to use a standard browser as the interfacing computer program 15 on the terminals 14, and in order to ensure that the acquired data do not become publicly known, it is possible to take various measures already known in the field of security in exchanging data over the Internet, such as data protection by means of a restricted-access input (user/password) and protected data transmission via SSL (Secure Socket Layer) or VPN (Virtual Private Network). Even in the case of an internal data communications network 13, it is possible to interface, from the terminals 14, with the data storaging and transmission devices 11 by means of an interfacing computer program based on Web technology 15.

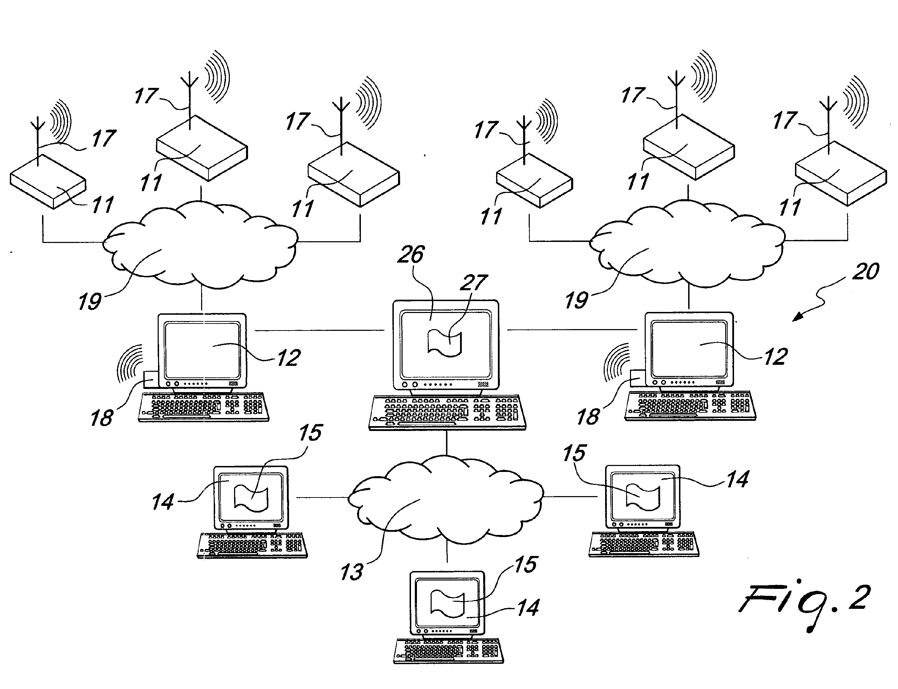

As shown in Figure 2, the architecture of the telecontrol system 20 can also assume other forms, which differ from each other not only in the choice of the type of data communications network 13. For example, there can be a plurality of groups of data storing and transmission devices 11, which by interfacing with the mobile communications network 19 are each connected to a local server 12, said local servers 12 being in turn connected to a central server 26, through which the link is extended to the data communications network 13 and then to the individual terminals 14.

Hybrid embodiments between the telecontrol system 10 of Figure 1 and the telecontrol system 20 of Figure 2, which can vary both in the choice of the architecture of the system and in the choice of the type of data communications network or of the means for interfacing with the mobile communications network, are clearly within the scope of the inventive concept.

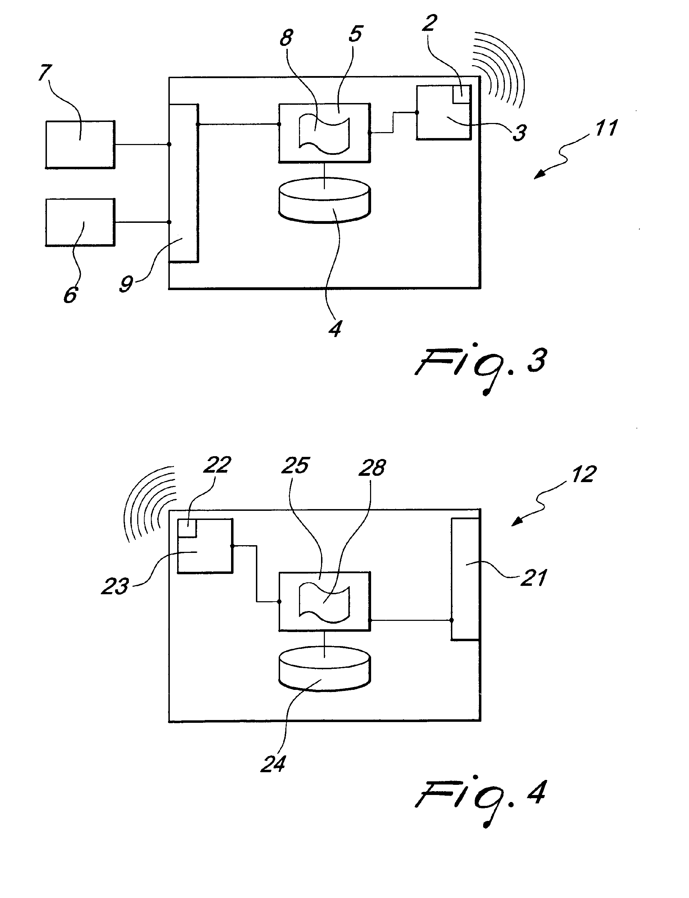

Figure 3 is a schematic view of a storing and transmission device 11, which comprises input ports and/or output ports 9, through which it is possible to connect externally to the device 11 respectively means 6 for acquiring data and means 7 for executing commands. As an alternative, the data acquisition means 6 and the command execution means 7 can be integrated in the device.

The data acquisition means 6 and the command execution means 7 are connected to a central processing unit 5, which is provided with memory means 4 that are adapted to store the data acquired by the data acquisition means 6. Moreover, said central processing unit 5 is connected, by means of circuits 3 for interfacing with the mobile communications network, to a means for the wireless transmission of signals 2. Said processing unit 5, by executing the firmware program 8, is adapted to drive the storing and transmission device 11 itself and the command execution means 7.

Likewise, the server 12, shown schematically in Figure 4, comprises input and output ports 21, through which the server 12 is connected to the data communications network 13. Said server 12 further comprises a central processing unit 25, which is connected to memory means 24 and, by means of circuits 23 for interfacing with the mobile communications network, to a means for the wireless broadcasting of signals 22. Said processing unit 25 is adapted to drive said server 12 and to run a computer program that acts as a communications engine 28 for encoding and decoding the addressing of the individual data packets.

Operation of the device according to the invention is as follows.

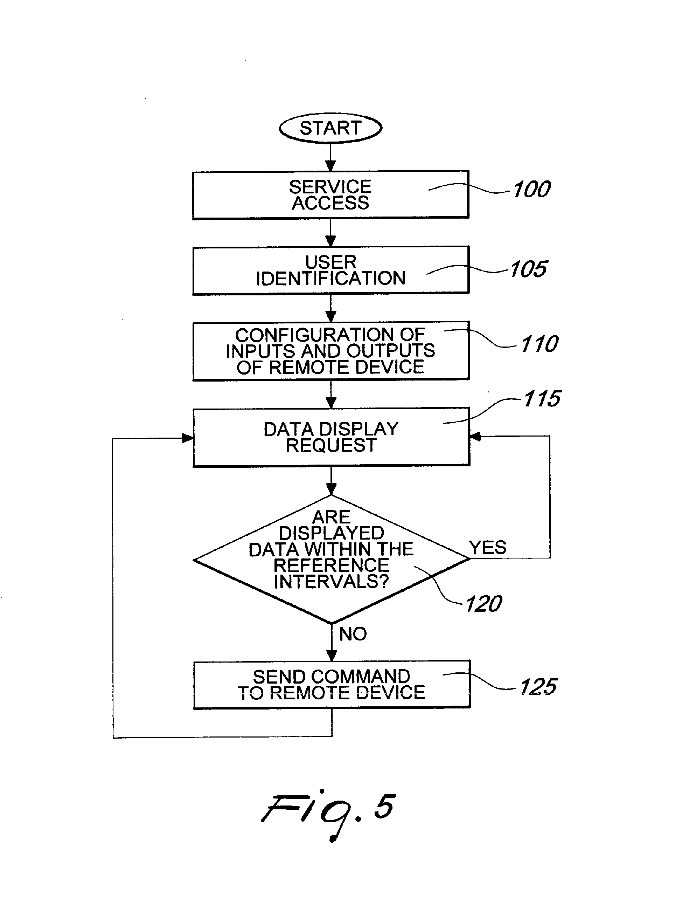

In the preferred embodiment described hereinafter, in step 100 of Figure 5 the user accesses the telecontrol system 10 by entering his access credentials from a terminal 14 on which the interface computer program 15 is running. In the subsequent step 105, the entered data are verified in order to identify the user.

Once the user has entered the system 10, in step 110 he can, if necessary, reconfigure the inputs and outputs 9 of the data storing and transfer devices 11 or remote devices.

In step 115, the request to display the data collected by one or more remote devices 11 is submitted. The displayed data are compared in step 120 with reference values in order to check whether they are in accordance with each other. If they are, the process returns to step 115 in order to repeat the request to display the data to be checked. Otherwise, the process continues with step 125, in which it is possible to send a command to the remote device 11 in order to vary the parameters so that they are within the reference intervals.

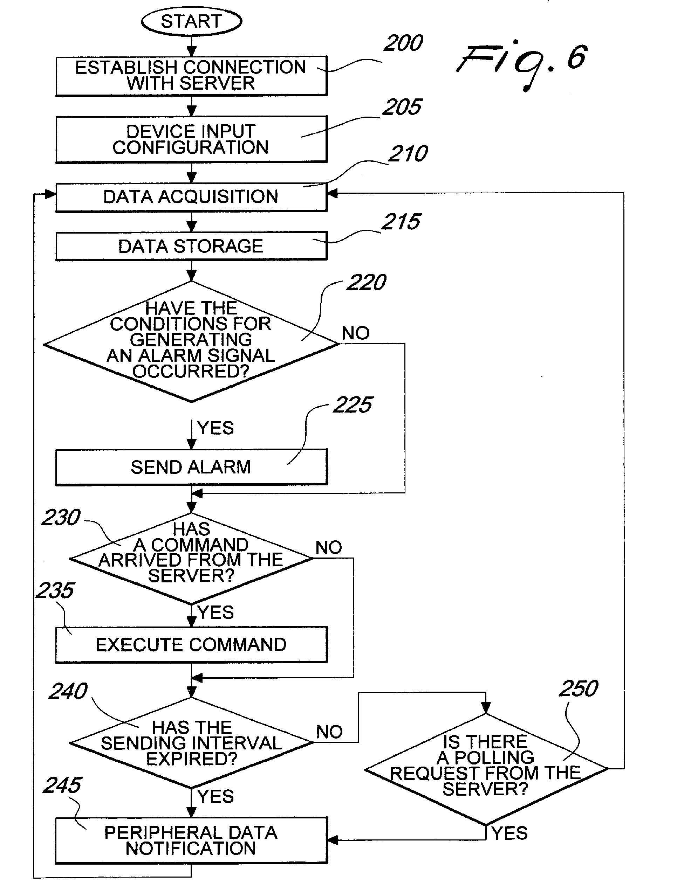

Figure 6 illustrates schematically the steps of the operation of a data storing and transmission device 11 used in a particular embodiment of the telecontrol system 10.

Initially, in step 200, the connection with the server is established in which the remote device 11 is identified. If necessary, in step 205 the remote device 11 receives the commands for configuring its inputs and outputs 9 and said inputs and outputs are thus initialized.

Subsequently, in step 210, the acquisition of the measurement data begins by way of the data acquisition means 6, and is repeated at predefined regular intervals. After storing the acquired data (step 215), a check is made to determine whether the conditions for generating an alarm signal are present (step 220). If so, said alarm signal is sent in step 225. Otherwise, control moves directly to step 230, in which the arrival of a command from the server 12 is checked. If so, the command is performed in step 235.

Step 240 then checks the sending interval. If it has not expired, and in step 245 there is no request for polling on the part of the server 12, the remote device 11 restarts from step 210 by acquiring new data.

If instead in step 240 the sending interval has expired or in step 250 it is determined that there has been a polling request, then control moves on to step 245, in which the data acquired by the remote device 11 are notified to the server 12. After this additional step 245 has ended, the remote device resumes the cycle for acquiring and checking data, returning to step 210 and repeating the steps that follow it.

In addition to the basic functions described here, the system according to the invention can allow various other functions, including the updating, setting, power-on and power-off of the device for storing and transmitting data 11 remotely. It is further possible to obtain remotely operating information related to the peripherals connected to the input or output 9 of the device 11 according to the invention and, if necessary, change their setting or drive them.

Moreover, the telecontrol system 10 can also allow interaction among the data storing and transmission devices 11 that are used. For this purpose, it is possible to define rules that describe the behavior of the devices 11 according to the invention so that they can perform automation logic criteria, for example on the basis of the values in input to one or more specific devices 11 used in the system 10.

In an embodiment described here merely by way of non-limiting example, communication between the device 11 and the server 12 is based on the TCP/IP protocol, which allows to manage the integrity of the received data item, and on a set of commands for managing the parameters of the device 11.

The server 12 can be constituted by a P4+ dual-processor system, provided with 512 MB RAM, SCSII 40 GB of the RAID type, with a DAT-type backup unit and with a Windows 2000 Server Advanced or Windows 2003 Server operating system. A communications engine 27, defined here by the term multiplexer, for exchanging data with the devices 11, runs on the server.

The multiplexer is therefore a software service that resides on the main server and has the task of managing communication with the remote devices and of collecting the data by storing them in an SQL Server database 24. At any time, a plurality of devices can be connected and can exchange information with the multiplexer by using a proprietary protocol in master-slave logic.

According to the preferred embodiment, the front-end software 27 communicates with the devices 11 by means of an ODBC connection to a SQL Server database 24, by means of SQL queries and commands.

The information related to the input/output states of the devices 11 are characterized by a timebase in the <date-time> format, synchronized with the main server 12.

Each device 11 is constituted by a certain number of peripherals, some of which are standard while others can be customized. For example, the standard peripherals that are present on board the device 11 can be constituted by 8 digital inputs, 8 analog inputs, 3 relay outputs, an RS-485 bus, an I2C bus and an RS-232 serial port.

Each peripheral that is present in the device 11 is characterized by an address. The set of commands uses this addressing to manage the peripherals of a device 11, performing addressing with one byte of information and reserving the value "0" for indicating broadcasting, i.e., the addressing of all the peripherals that are present.

Since one of the objects of the invention is to limit the flow of data between the server and the peripherals in order to reduce communications costs, the data are transmitted in binary format in frames of variable length. This solution also allows to transfer files and programs and is useful for example to update the firmware 8 of the device 11.

In order to allow the transmission of binary data, a so-called byte stuffing algorithm is used to identify the beginning and end of the frame. A special character DLE (Data Link Escape) is defined for this purpose, and a frame is required to begin with [DLE]+[command] and end with [DLE]+ [terminator].

Possible separations of data within a same frame are performed by means of the sequence [DLE]+[separator].

In reception, the server proceeds as follows: it waits for the start of the next frame, waiting to receive the [DLE] character and checking the subsequent byte. Once it has received the DLE character, it begins reception of the frame and finally waits for the frame terminator.

The generic structure of the commands exchanged between the server and the device 11 is as follows:
[command identifier] [peripheral address][data item]... [data item] [frame terminator]

Naturally, depending on the type of command, it is possible to omit the [peripheral address] and [data item] fields. The [command identifier] field is preferably formed by two bytes, the first of which is always the [DLE] character. The [peripheral address] field can be formed even by a single byte.

The following Table 1 provides a list of commands that the server 12 can send to the device 11.

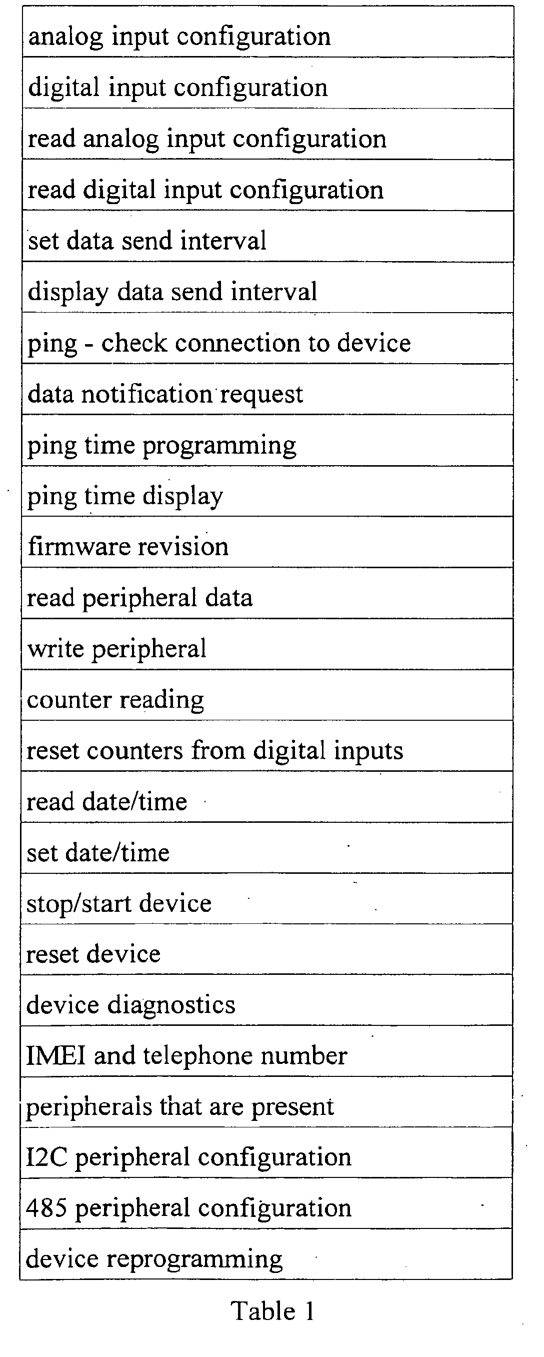

The following table 2 lists a series of commands that the device 11 can give to the server 12. These commands are limited to the management of the connection of the device 11 to the server 12, to notification of alarms, generated for example by variations of the status of the digital inputs or by the exceeding of thresholds of analog inputs, and by the sending of data following time-controlled requests.

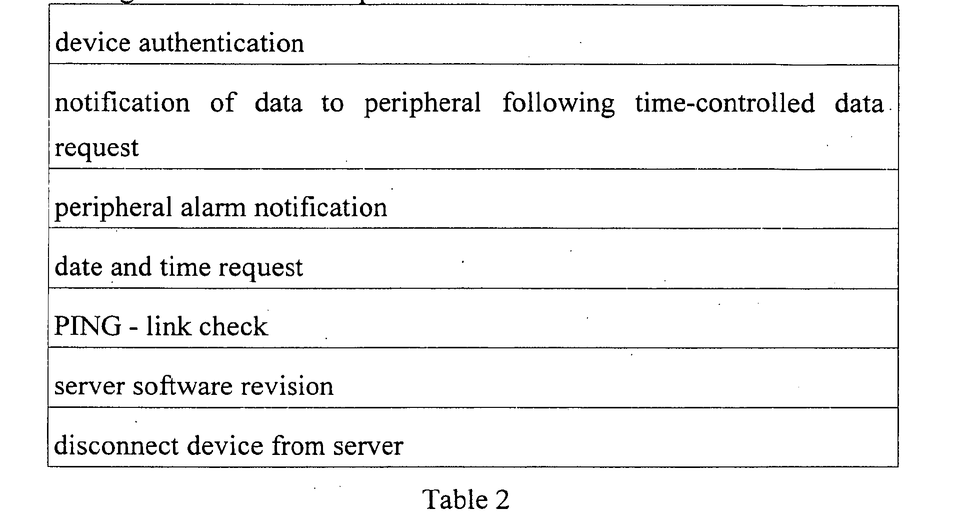

The structure of the firmware 8 that controls the device 11 consists schematically of a first initialization step and a subsequent continuous-cycle step.

During the initialization step, the device 11 is reset, initializing its hardware components and running a watchdog with the task of detecting and reporting error conditions. Moreover, configuration parameters are loaded from the memory, which is preferably of the EEPROM type, and the I2C bus is checked in order to search for the connected peripherals.

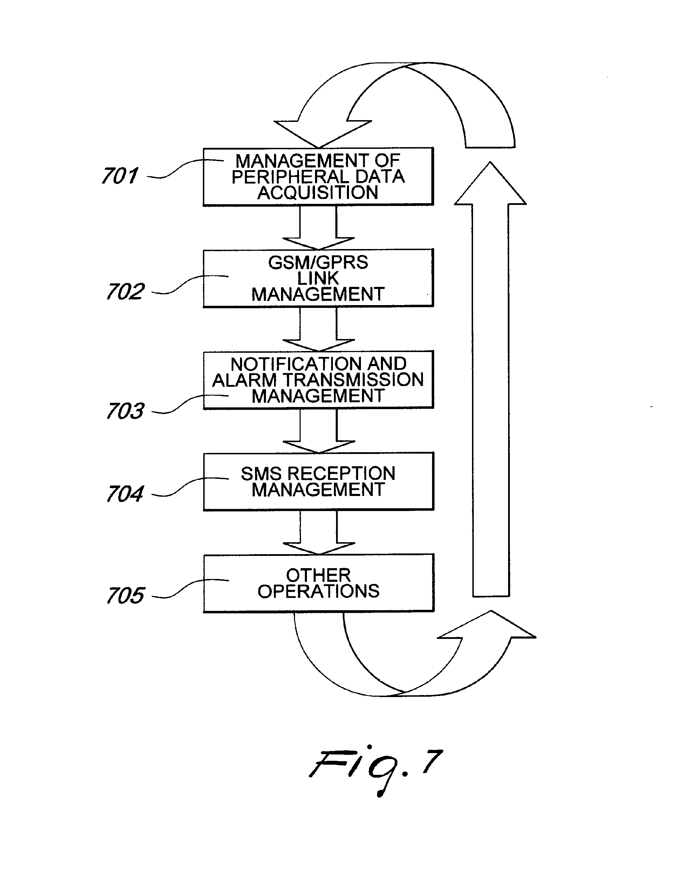

The main cycle performed by the firmware 8 of the device 11, which is repeated continuously in order to manage a plurality of operations in parallel, is detailed in Figure 7.

In step 701, the acquisition of data from the peripherals is performed; it consists of the time-controlled acquisition of data detected by the connected peripherals and of the activation of peripherals that provide for this type of action.

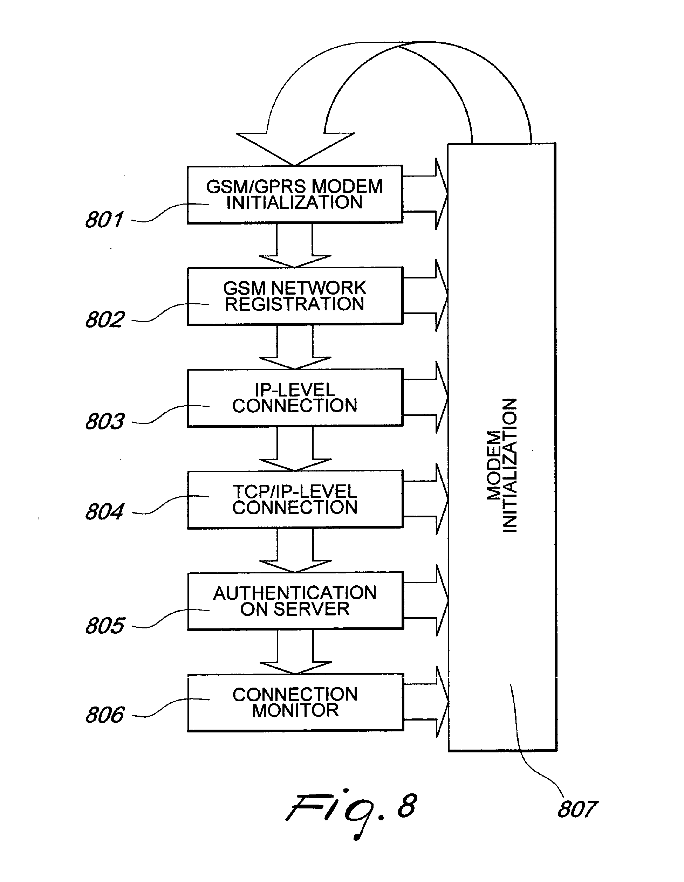

Step 702 manages the connection between the device 11 and the server 12, based for example on GSM/GPRS, with the aim of keeping the device 11 constantly connected to the TCP/IP server 12. This step is described in greater detail with reference to Figure 8.

In step 703, notification and alarm management deals with the storing and sending of the data from the device 11 to the server 12.

If the connection between the device and the server is not present, the data are stored in a buffer memory and sent to the server when the connection is restored.

Step 704 manages the reception of SMS messages, whereas step 705 manages corollary operations, such as time-controlled operations and management of the parsers related to communications over the RS-232 and RS-485 serial ports.

With reference to Figure 8, the management of the GSM/GPRS connection is now described in greater detail, entirely similar considerations being of course applicable in the case of an UMTS connection. One of the main characteristics of the invention is in fact that it uses a type of communication between the devices and the server that allows to bear call costs that are calculated on the basis of the data traffic that is actually generated, regardless of the time for which the connection remains open. For this reason, it is necessary to monitor at regular intervals the status of connection, in order to detect whether the communication channel between the device 11 and the server 12 is active and has not instead been rendered inoperative as a consequence of failures or in particular of any malfunctions of the GSM network 19.

The first step 801 is an initialization step, in which the default parameters for managing the circuits for interfacing with the mobile communications network 3 are set, said circuits being present, in this case, in the form of a GSM/GPRS modem.

The step 802 for registering the GSM network checks the status of the GSM network.

Subsequently, the step 803 for connection at the IP level manages the first step of the connection to the provider, which is completed in step 804.

In step 805, connection to the server 12 is performed. At this point, the process stabilizes in step 806 on constant monitoring of the status of the connection between the device 11 and the server 12.

If any one of these steps is not completed correctly within a preset time, after a certain number of attempts the modem 3 is reinitialized and the process resumes from step 801.

By doing so, one ensures that the communication between the device 11 and the server 12 remains active without however forcing the user of the system to be burdened by connection costs that are calculated on the basis of time.

In a preferred embodiment, the device 11 is kept constantly connected to the server 12 by using the General Packet Radio Service (GPRS) technology of the GSM network. The connection is performed by opening an IP (Internet Protocol) connection with a dynamic address to the provider of the GPRS service and by using the TCP/IP layer to create a socket for connection to a port of the server 12. The socket constitutes the channel for transmission to and from the device 11. The server 12 can thus open and manage a large number of device connections.

If the connection to the server 12 becomes temporarily unavailable, for example due to failures of the GSM network, the device 11 continues regularly to perform the measurements, storing the data in a data logger while waiting to be able to send them. The data logger is constituted substantially by a memory that allows to store the data even if no power supply is available.

As soon as the connection to the server 12 is reestablished, all the information present in the data logger is transmitted. In this manner, the system protects itself against data loss and ensures a continuous monitoring that is independent of the status of the connection.

The device 11 periodically checks the status of the connection to the server 12 in order to check whether the channel is open at the IP level and whether the server 12 is reachable.

Moreover, the structure of the protocol for communication between the server 12 and the device 11 ensures that if a data transmission is not matched by a reception confirmation, the system reacts by checking the status of the connection.

In particular, once the "connection established" status is reached, a test is performed constantly in order to verify that the connection is active. If the connection drops, the modem is switched off and the connection procedure is restarted.

The same occurs during the reception of a frame, with a timeout check. If, within a set time after the beginning of the reception of a frame, for example 2 seconds, said frame is not completed, the device disconnects from the server, the modem is switched off and the connection procedure is restarted.

The parser for interpreting the received commands is kept running, so as to manage the reception of commands as soon as they are received as described above, sending any return replies where required.

At the same time, the presence of alarms or notifications to be transmitted is monitored constantly and, if necessary, said alarms or notifications are sent to the server.

Finally, the need to transmit a PING signal is checked. This allows to test the connection between the server and the device. If the device obtains no reply within a set time after sending the command, for example 2 seconds, it disconnects from the server. The modem is switched off and the connection procedure restarts.

It has thus been found that the device according to the invention thus described can maintain a constant connection over a second- or third-generation packet-switching mobile communications network, and is therefore capable of sending, at all times, the data acquired at the production sites, with an evident cost reduction. This permanent connection is in fact particularly reliable and advantageous from an economic standpoint, since the particular types of mobile communications network with which the invention works base their costs on the quantity of transmitted data packets.

Moreover, it has been ascertained that the device according to the invention thus described allows the telecontrol system to directly act remotely on the operation of the production sites.

Moreover, it has been found that the telecontrol system according to the invention has an architecture that eliminates the need for the user to have his own control center and is capable of managing a plurality of control units simultaneously.

The invention thus conceived is susceptible of numerous modifications and variations, all of which are within the scope of the inventive concept. Thus, for example, it is possible to vary the architecture of the system by optionally also providing subgroups of data storing and transmission devices connected to local servers, which in turn access the data communications network via a central server, and likewise the types of data communications network, whether mobile or not, can also vary, so long as they have equivalent characteristics with reference to the communications method.

It is also evident that the inventive concept on which the present invention is based is independent of the actual implementation of the software modules, which can be provided in any language and on any hardware platform, and likewise the method of integration between the server and the querying terminals is non-limiting in terms of the invention.

Therefore, the scope of the protection of the claims must not be limited by the descriptions or by the preferred embodiments described herein by way of example, but rather the claims must comprise all the characteristics of patentable novelty that reside within the present invention, including all the characteristics that would be treated as equivalent by the person skilled in the art.

The disclosures in Italian Patent Application no. VR2004A000084, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A data storing and transmission device comprising a central processing unit (5) provided with memory means (4) and connected to at least one means for acquiring data (6), further comprising means for interfacing with a mobile communications network (2, 3, 17), **characterized in that** said means for interfacing with a mobile communications network (2, 3, 17) are adapted to interface with a second- or third-generation packet-switching network.

2. The data storing and transmission device according to claim 1, **characterized in that** said central processing unit (5) is further connected to at least one means (7) for executing commands.

3. The data storing and transmission device according to one of the preceding claims, **characterized in that** said means for interfacing with a communications network (2, 3, 17) are adapted for interfacing with the GPRS network.

4. The data storing and transmission device according to claim 3, **characterized in that** said means for interfacing with a communications network (2, 3, 17) comprise circuits (3) adapted for interfacing with the GPRS network and a corresponding means for the wireless transmission of signals (2, 17).

5. The data storing and transmission device according to one of claims 1 or 2, **characterized in that** said means for interfacing with a communications network (2, 3, 17) are adapted for interfacing with the UMTS network.

6. The data storing and transmission device according to claim 5, **characterized in that** said means for interfacing with a communication network (2, 3, 17) comprise circuits (3) adapted for interfacing with the UMTS network and a corresponding means for the wireless transmission of signals (2, 17).

7. A telecontrol system comprising at least one data storing and transmission device (11), which communicates with a server (12, 26) connected to a data communications network (13) that can be accessed from terminals (14), said data storing and transmission device (11) and said server (12, 26) comprising means for interfacing with a mobile communications network (2, 3, 17, 18, 22, 23), **characterized in that** said means for interfacing with a mobile communications network (2, 3, 17, 18, 22, 23) are adapted for interfacing with a second- or third-generation packet-switching network.

8. The telecontrol system according to claim 7, **characterized in that** said data storing and transmission device (11) is further connected to at least one means for executing commands (7).

9. The telecontrol system according to one of claims 7 or 8, **characterized in that** said means for interfacing with a communications network (2, 3, 17, 18, 22, 23) are adapted for interfacing with the GPRS network.

10. The telecontrol system according to one of claims 7 or 8, **characterized in that** said means for interfacing with a communications network (2, 3, 17, 18, 22, 23) are adapted for interfacing with the UMTS network.

11. The telecontrol system according to one of claims 7 to 10, **characterized in that** said data storing and transmission devices communicate in groups with local servers (12), which are connected to said data communications network (13) via a central server (26).

12. The telecontrol system according to one of claims 7 to 11, **characterized in that** said data communications network (13) is the internet.

13. The telecontrol system according to one of claims 7 to 11, **characterized in that** said data communications network (13) is an internal data communications network.

14. The telecontrol system according to one of claims 7 to 13, **characterized in that** said server (12, 26) comprises communications means (27) adapted to encode and decode the addressing of the individual data packets.

15. The telecontrol system according to one of claims 7 to 14, **characterized in that** said terminals (14) comprise means (15) for interfacing with said data transmission and storing devices (11) based on Web technology.
